# EUROPEAN PATENT APPLICATION

(11) **EP 3 835 278 A1**
(43) Date of publication of application: **16.06.2021**
(21) Application number: 19848252.3
(22) Date of filing: 02.07.2019
(51) Int. Cl.: C03C 27/12, B32B 17/10, B32B 27/22, B32B 27/30, B60J 1/00, C08L 33/00, C08L 101/12

(54) **INTERMEDIATE FILM FOR LAMINATED GLASSES, AND LAMINATED GLASS**

(30) Priority: 09.08.2018 JP 2018150887
(71) Applicant: SEKISUI CHEMICAL CO., LTD., Osaka-shi Osaka 530-8565 (JP)
(72) Inventor: IWAMOTO, Tatsuya, Kouka-shi, Shiga 528-8585 (JP); SAKAMOTO, Yuu, Kouka-shi, Shiga 528-8585 (JP)
(74) Representative: Ter Meer Steinmeister & Partner
(86) International application number: PCT/JP2019/026319
(87) International publication number: WO 2020/031557

(57) **Abstract**

Provided is an interlayer film for laminated glass having increased tanδ and excellent sound insulating property in an interlayer film having a low glass transition temperature. An interlayer film for laminated glass according to the present invention includes a resin layer containing a resin component and a plasticizer, and combination of the resin component and the plasticizer in the resin layer is such that when a composition having a glass transition temperature of -10°C is obtained by blending only the plasticizer in 100 parts by weight of the resin component, a blending amount of the plasticizer per 100 parts by weight of the resin component in the composition is 60 parts by weight or less, and the interlayer film satisfies the formula: tanδ₁ ≥ 1.3, or satisfies the formula: (tanδ₀ - tanδ₁)/(Tg₀ + 10) ≤ 0.01.

## Description

### TECHNICAL FIELD

The present invention relates to an interlayer film for laminated glass which is used for obtaining laminated glass. Moreover, the present invention relates to a laminated glass prepared with the interlayer film for laminated glass.

### BACKGROUND ART

Since laminated glass generally generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between a pair of glass plates.

Examples of the interlayer film for laminated glass include a single-layered interlayer film having a one-layer structure and a multi-layered interlayer film having a two or more-layer structure.

As one example of the interlayer film for laminated glass, the following Patent Document 1 discloses an interlayer film having a sound insulating layer formed of composition (A) containing at least one kind of resin (a1) selected from a thermoplastic resin and a thermosetting resin. Tanδ that is obtained when the dynamic viscoelasticity of the sheet formed of the composition (A) to have a thickness of 0.8 mm is measured at a frequency of 0.3 Hz in a tensile mode has the maximum value at temperature T_{A} (°C). In the measurement of the dynamic viscoelasticity, T_{A} (°C) ranges from -50 to 50°C, and tanδ at T_{A} (°C) is 2.5 or more.

Patent Document 1 indicates polyvinyl acetal, polyvinyl alcohol, polyurethane, polyvinyl carboxylate, olefin-vinyl carbonate copolymer, polyurethane elastomer, polyester elastomer, styrene-diene block copolymer, and chlorinated polyolefin, as the thermoplastic resin. Patent Document 1 indicates epoxy resins, phenol resins, urethane resins, melamine resins, and unsaturated polyester resins as the thermosetting resin.

Also, Patent Document 1 indicates that the sound insulating property of the interlayer film is enhanced. Examples of Patent Document 1 indicate, as measurement results of sound transmission loss at temperatures of 0°C, 5°C, 10°C, 15°C, 20°C, 25°C, 30°C, 35°C and 40°C, the temperature at which the mean value of the sound transmission loss is the largest, and a mean value of the sound transmission loss at a plurality of frequencies at the temperature at which the mean value of the sound transmission loss is the largest.

As a composition for obtaining an interlayer film for laminated glass, the following Patent Document 2 discloses a photocurable resin composition containing a (meth)acrylic polymer, a methacrylic monomer, and a photopolymerization initiator. Patent Document 2 indicates that a laminated glass that is difficult to be broken when an impact is applied from outside can be obtained.

### Related Art Documents

### Patent Documents

Patent Document 1: WO 2017/170259 A
Patent Document 2: WO 2017/209013 A

### SUMMARY OF THE INVENTION

### PROBLEMS TO BE SOLVED BY THE INVENTION

A laminated glass including an interlayer film is used in various temperature environments. In a laminated glass prepared with a conventional interlayer film, it is sometimes the case that the sound insulating property cannot be enhanced over a wide range of temperature. A laminated glass having high sound insulating property at a specific one temperature can have low sound insulating property when the laminated glass is used at a temperature different from the specific one temperature.

In an interlayer film having sound insulating property, it is preferred to lower the glass transition temperature sufficiently so as to suppress the reduction in sound transmission loss in a coincidence region at low temperatures. However, an interlayer film having a low glass transition temperature faces the problem of difficulty in making the loss tangent tanδ high.

Also, in Patent Document 1, a large amount of a special compound besides a resin and a plasticizer is added for making tanδ high. In such an interlayer film, it is easily conceivable that the special compound bleeds out to the surface of the interlayer film, or the resin and the plasticizer separate from each other during long-term stock of the interlayer film, leading the problem of impairment in transparency.

Patent Document 2 indicates that use of a photocurable resin composition containing a (meth)acrylic polymer, a methacrylic monomer, and a photopolymerization initiator makes it possible to obtain a laminated glass that is difficult to be broken when an impact is applied from outside, but Patent Document 2 lacks the description about the sound insulating property.

The present invention is aimed at providing an interlayer film for laminated glass having increased tanδ and excellent sound insulating property in an interlayer film having a low glass transition temperature. Moreover, the present invention is also aimed at providing laminated glass prepared with the interlayer film for laminated glass.

### MEANS FOR SOLVING THE PROBLEMS

According to a broad aspect of the present invention, there is provided an interlayer film for laminated glass (hereinafter, sometimes described as interlayer film) having a one-layer structure or a two or more-layer structure, the interlayer film comprising a resin layer containing a resin component and a plasticizer, combination of the resin component and the plasticizer in the resin layer being such that when a composition having a glass transition temperature of -10°C is obtained by blending only the plasticizer in 100 parts by weight of the resin component, a blending amount of the plasticizer per 100 parts by weight of the resin component in the composition is 60 parts by weight or less, the interlayer film having the following first composition or the following second composition.

First configuration: when a composition having a glass transition temperature of -10°C is obtained by blending only the plasticizer in 100 parts by weight of the resin component, tanδ at -10°C of the composition is defined as tanδ₁. The interlayer film satisfies the formula: tanδ₁ ≥ 1.3.

Second configuration: a glass transition temperature of the resin component in the resin layer is defined as Tg₀°C. Tanδ at Tg₀°C of the resin component in the resin layer is defined as tanδ₀. When a composition having a glass transition temperature of -10°C is obtained by blending only the plasticizer in 100 parts by weight of the resin component, tanδ at -10°C of the composition is defined as tanδ₁. The interlayer film satisfies the formula: (tanδ₀ - tanδ₁)/(Tg₀ + 10) ≤ 0.01.

In a specific aspect of the interlayer film according to the present invention, the interlayer film includes the first configuration.

In a specific aspect of the interlayer film according to the present invention, the interlayer film includes the second configuration.

In a specific aspect of the interlayer film according to the present invention, the interlayer film includes the first configuration and the second configuration.

In a specific aspect of the interlayer film according to the present invention, the resin component in the resin layer has a glass transition temperature of 40°C or more.

In a specific aspect of the interlayer film according to the present invention, the resin component in the resin layer is a resin component other than a polyvinyl acetal resin.

In a specific aspect of the interlayer film according to the present invention, the resin component is a polymer of a monomer having a vinyl group.

In a specific aspect of the interlayer film according to the present invention, the polymer of the monomer having a vinyl group is a (meth)acryloyl polymer.

In a specific aspect of the interlayer film according to the present invention, the monomer having a vinyl group includes a (meth)acrylic ester having a cyclic structure.

In a specific aspect of the interlayer film according to the present invention, the plasticizer includes an organic ester plasticizer.

In a specific aspect of the interlayer film according to the present invention, the plasticizer includes triethylene glycol di-2-ethylhexanoate, or triethylene glycol di-2-ethylbutyrate.

In a specific aspect of the interlayer film according to the present invention, the interlayer film includes a first layer and a second layer arranged on a first surface side of the first layer.

In a specific aspect of the interlayer film according to the present invention, when the overall thickness of the interlayer film is T, the thickness of the first layer is 0.25T or less

In a specific aspect of the interlayer film according to the present invention, the interlayer film includes a third layer arranged on a second surface side opposite to the first surface side of the first layer.

In a specific aspect of the interlayer film according to the present invention, the first layer is the resin layer, the second layer contains a thermoplastic resin and a plasticizer, and the third layer contains a thermoplastic resin and a plasticizer.

According to a broad aspect of the present invention, there is provided a laminated glass including a first lamination glass member, a second lamination glass member, and the above-described interlayer film for laminated glass, the interlayer film for laminated glass being arranged between the first lamination glass member and the second lamination glass member.

### EFFECT OF THE INVENTION

The interlayer film for laminated glass according to the present invention has a one-layer structure or a two or more-layer structure. The interlayer film for laminated glass according to the present invention includes a resin layer containing a resin component and a plasticizer. Combination of the resin component and the plasticizer in the resin layer is such that when a composition having a glass transition temperature of -10°C is obtained by blending only the plasticizer in 100 parts by weight of the resin component, a blending amount of the plasticizer per 100 parts by weight of the resin component in the composition is 60 parts by weight or less. The interlayer film for laminated glass according to the present invention includes the first configuration, or includes the second configuration. Since the interlayer film for laminated glass according to the present invention includes the configuration as described above, tanδ is increased, and the sound insulating property is excellent in the interlayer film having a low glass transition temperature.

### BRIEF DESCRIPTION OF DRAWINGS

[Fig. 1] Fig. 1 is a sectional view schematically showing an interlayer film for laminated glass in accordance with a first embodiment of the present invention.
[Fig. 2] Fig. 2 is a sectional view schematically showing an interlayer film for laminated glass in accordance with a second embodiment of the present invention.
[Fig. 3] Fig. 3 is a sectional view schematically showing an example of laminated glass prepared with the interlayer film for laminated glass shown in Fig. 1.
[Fig. 4] Fig. 4 is a sectional view schematically showing an example of laminated glass prepared with the interlayer film for laminated glass shown in Fig. 2.

### MODES FOR CARRYING OUT THE INVENTION

Hereinafter, the present invention will be described in detail.

### (Interlayer film for laminated glass)

The interlayer film for laminated glass according to the present invention (hereinafter, sometimes described as interlayer film) has a one-layer structure or a two or more-layer structure.

The interlayer film according to the present invention includes a resin layer containing a resin component and a plasticizer.

In the interlayer film according to the present invention, combination of the resin component and the plasticizer in the resin layer is such that when a composition having a glass transition temperature of -10°C is obtained by blending only the plasticizer in 100 parts by weight of the resin component, a blending amount of the plasticizer per 100 parts by weight of the resin component in the composition is 60 parts by weight or less.

In obtaining the composition having a glass transition temperature of -10°C, the glass transition temperature is adjusted by varying the blending amount of the plasticizer (the kind used in the resin layer) per 100 parts by weight of the resin component (the kind used in the resin layer). It is sometimes the case that the glass transition temperature of the obtained composition is not -10°C even when the blending amount of the plasticizer per 100 parts by weight of the resin component is varied. In this case, the interlayer film does not include the configuration "combination of the resin and the plasticizer in the resin layer is such that when a composition having a glass transition temperature of - 10°C is obtained by blending only the plasticizer in 100 parts by weight of the resin component, a blending amount of the plasticizer per 100 parts by weight of the resin component in the composition is 60 parts by weight or less."

Also, the interlayer film according to the present invention includes the following first configuration or includes the following second configuration.

First configuration: when a composition having a glass transition temperature of -10°C is obtained by blending only the plasticizer in 100 parts by weight of the resin component, tanδ at -10°C of the composition is defined as tanδ₁. The interlayer film satisfies the formula: tanδ₁ ≥ 1.3.

Second configuration: a glass transition temperature of the resin component in the resin layer is defined as Tg₀°C. Tanδ at Tg₀°C of the resin component in the resin layer is defined as tanδ₀. When a composition having a glass transition temperature of -10°C is obtained by blending only the plasticizer in 100 parts by weight of the resin component, tanδ at -10°C of the composition is defined as tanδ₁. The interlayer film satisfies the formula: (tanδ₀ - tanδ₁)/(Tg₀ + 10) ≤ 0.01.

Since the interlayer film for laminated glass according to the present invention includes the configuration as described above, tanδ is increased, and the sound insulating property is excellent in the interlayer film having a low glass transition temperature. Also, the interlayer film for laminated glass according to the present invention is excellent in long-term stability and transparency because the interlayer film includes the configuration as described above.

It is preferred that combination of the resin component and the plasticizer in the resin layer be such that when a composition having a glass transition temperature of -10°C is obtained by blending only the plasticizer in 100 parts by weight of the resin component, a blending amount of the plasticizer per 100 parts by weight of the resin component in the composition is 55 parts by weight or less. It is more preferred that combination of the resin component and the plasticizer in the resin layer be such that when a composition having a glass transition temperature of -10°C is obtained by blending only the plasticizer in 100 parts by weight of the resin component, a blending amount of the plasticizer per 100 parts by weight of the resin component in the composition is 50 parts by weight or less. In these cases, the sound insulating property, the transparency and the long-term stability are further enhanced.

The interlayer film according to the present invention may include the first configuration, and may include the second configuration. It is preferred that the interlayer film according to the present invention include both the first configuration and the second configuration.

From the viewpoint of further enhancing the sound insulating property, tanδ₁ is preferably 1.3 or more, more preferably 2 or more, further preferably 2.5 or more.

From the viewpoint of further enhancing the sound insulating property, the interlayer film according to the present invention preferably satisfies the formula: (tanδ₀ - tanδ₁) / (Tg₀ + 10) ≤ 0.005, and more preferably satisfies the formula: (tanδ₀ - tanδ₁) / (Tg₀ + 10) ≤0.

From the viewpoint of enhancing the moldability in extrusion molding, the glass transition temperature (Tg₀) of the resin component in the resin layer is preferably more than -10°C, more preferably 40°C or more, further preferably 50°C or more, and is preferably 100°C or less, more preferably 90°C or less, further preferably 80°C or less.

The glass transition temperature and the tanδ are measured in the following manner.

Regarding the composition in which the plasticizer is blended in 100 parts by weight of the resin component, after storing the composition at a temperature of 23°C and a humidity of 30% for 1 month or more, an object (layer) to be measured having press-molded with a press molder is subjected to measurement using "ARES-G2" available from TA Instruments. Regarding the interlayer film (resin layer) having a monolayer structure, after storing the interlayer film at a temperature of 23°C and a humidity of 30% for 1 month or more, an object (layer) to be measured having press-molded with a press molder is subjected to measurement using "ARES-G2" available from TA Instruments. Regarding the interlayer film having a multi-layered structure, after storing the interlayer film at a temperature of 23°C and a humidity of 30% for 1 month or more, a resin layer is isolated by delaminating a plurality of layers, and an object (layer) to be measured having press-molded with a press molder is subjected to measurement using "ARES-G2" available from TA Instruments. A parallel plate with a diameter of 8 mm is used as a jig, and the measurement is performed under the condition in which the temperature is decreased from 100°C to -50°C at a temperature decreasing rate of 3°C/minute and under the condition of a frequency of 1 Hz and a strain of 1%. In the obtained measurement results, the peak temperature of loss tangent is defined as glass transition temperature Tg (°C), and the value of loss tangent at the glass transition temperature is defined as tanδ.

Examples of the method capable of satisfying the first configuration or the second configuration include the following methods. (1) By using a resin component other than a polyvinyl acetal resin as a resin component in the resin layer, the first configuration or the second configuration is more easily satisfied. (2) By selecting the kind of the monomer constituting the resin component in the resin layer, the first configuration or the second configuration is more easily satisfied. For example, when the resin component is a (meth)acryloyl polymer, the first configuration or the second configuration is more easily satisfied by using a (meth)acryloyl polymer having a cyclic skeleton as the (meth)acryloyl polymer.

The interlayer film according to the present invention may have a one-layer structure and may have a two or more-layer structure. The interlayer film according to the present invention may have a two-layer structure, may have a three-layer structure, and may have a three or more-layer structure.

The interlayer film according to the present invention may have a one-layer structure of only a first layer. In this case, the first layer is the resin layer.

From the viewpoint of effectively enhancing the sound insulating property and adhesivity between layers, the interlayer film according to the present invention may include a first layer, and a second layer arranged on a first surface side of the first layer. In this case, it is preferred that the first layer be the resin layer.

From the viewpoint of effectively enhancing the sound insulating property and adhesivity between layers, the interlayer film according to the present invention may include a first layer, a second layer arranged on a first surface side of the first layer, and a third layer arranged on a second surface side opposite to the first surface side of the first layer. In this case, it is preferred that the first layer be the resin layer.

From the viewpoint of effectively enhancing the sound insulating property and adhesivity between the interlayer film and a glass member, it is preferred that the resin layer be not a surface layer in the interlayer film, and it is preferred that the resin layer be an intermediate layer in the interlayer film. It is to be noted that the resin layer may be a surface layer in the interlayer film.

From the viewpoint of enhancing the transparency of the laminated glass, the visible light transmittance of the interlayer film is preferably 70% or more, more preferably 80% or more, further preferably 85% or more.

The visible light transmittance is measured at a wavelength ranging from 380 nm to 780 nm by using a spectrophotometer ("U-4100" available from Hitachi High-Tech Corporation) in conformity with JIS R3211:1998.

The visible light transmittance of the interlayer film may be measured while the interlayer film is arranged between two sheets of clear glass.

For enhancing the visible light transmittance, the interlayer film and the resin layer need not contain a coloring agent, and need not contain carbon black.

The interlayer film is suitably used for obtaining a laminated glass by being arranged between a first lamination glass member and a second lamination glass member. It is preferred that the lamination glass member be a glass plate. The total of the thickness of the first lamination glass member and the thickness of the second lamination glass member is preferably 3.6 mm or more, more preferably 4 mm or more, further preferably 4.2 mm or more. In this case, it is possible to improve the silence in the vehicle interior, and it is possible to effectively enhance the sound insulating property of the laminated glass by the configuration of the present invention. The total of the thickness of the first lamination glass member and the thickness of the second lamination glass member is preferably 6 mm or less, more preferably 5 mm or less, further preferably 4.6 mm or less. In this case, it is possible to reduce the weight of the laminated glass.

The interlayer film is suitably used for obtaining a laminated glass by being arranged between a first lamination glass member having a thickness of 1.8 mm or more (preferably 2 mm or more, more preferably 2.1 mm or more) and a second lamination glass member. In this case, it is possible to improve the silence in the vehicle interior, and it is possible to effectively enhance the sound insulating property of the laminated glass by the configuration of the present invention. The interlayer film is suitably used for obtaining a laminated glass by being arranged between a first lamination glass member having a thickness of 3 mm or less (preferably 2.6 mm or less, more preferably 2.3 mm or less) and a second lamination glass member. In this case, it is possible to reduce the weight of the laminated glass.

Hereinafter, specific embodiments of the present invention will be described with reference to the drawings.

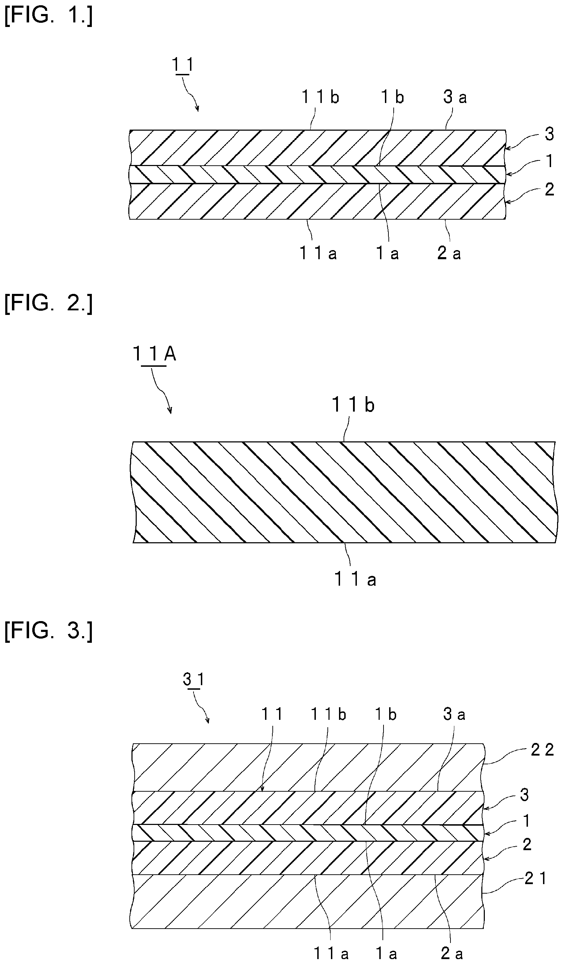

Fig. 1 is a sectional view schematically showing an interlayer film for laminated glass in accordance with a first embodiment of the present invention.

An interlayer film 11 shown in Fig. 1 is a multi-layered interlayer film having a two or more-layer structure. The interlayer film 11 is used for obtaining laminated glass. The interlayer film 11 is an interlayer film for laminated glass. The interlayer film 11 is provided with a first layer 1, a second layer 2 and a third layer 3. The second layer 2 is arranged on a first surface 1a side of the first layer 1 to be layered thereon. The third layer 3 is arranged on a second surface 1b side opposite to the first surface 1a of the first layer 1 to be layered thereon. The first layer 1 is an intermediate layer. Each of the second layer 2 and the third layer 3 is a protective layer and is a surface layer in the present embodiment. The first layer 1 is arranged between the second layer 2 and the third layer 3 to be sandwiched therebetween. Accordingly, the interlayer film 11 has a multilayer structure (second layer 2/first layer 1/third layer 3) in which the second layer 2, the first layer 1, and the third layer 3 are layered in this order.

In the interlayer film 11, it is preferred that the first layer 1 be the resin layer. The second layer 2 may be the resin layer, or the third layer 3 may be the resin layer.

In this connection, other layers may be arranged between the second layer 2 and the first layer 1 and between the first layer 1 and the third layer 3, respectively. A fourth layer (other layer) may be arranged between the second layer 2 and the first layer 1. A fifth layer (other layer) may be arranged between the first layer 1 and the third layer 3. It is preferred that the second layer 2 and the first layer 1, and the first layer 1 and the third layer 3 be directly layered. Examples of other layers include an adhesive layer, and a layer containing polyethylene terephthalate and the like.

Fig. 2 is a sectional view schematically showing an interlayer film for laminated glass in accordance with a second embodiment of the present invention.

An interlayer film 11A shown in Fig. 2 is a single-layered interlayer film having a one-layer structure. The interlayer film 11A is a first layer. The interlayer film 11A is used for obtaining laminated glass. The interlayer film 11A is an interlayer film for laminated glass.

In the interlayer film 11A, the interlayer film 11A per se is the resin layer.

Hereinafter, the details of the resin layer (which may be a first layer), the first layer, the second layer, and the third layer constituting the interlayer film according to the present invention, and the details of each ingredient contained in the resin layer (which may be a first layer), the first layer, the second layer, and the third layer will be described.

### (Resin component in first layer)

The first layer (including the single-layered interlayer film) contains the aforementioned resin component (sometimes described as a resin component (1)).

Examples of the resin component (1) include thermosetting resins and thermoplastic resins. The resin component (1) may be a cured product of a photocurable compound or a moisture-curable compound. The cured product of a photocurable compound or a moisture-curable compound can be a thermoplastic resin.

It is preferred that the first layer contain a thermoplastic resin (hereinafter, sometimes described as a thermoplastic resin (1)), or contain a cured product of a photocurable compound or a moisture-curable compound (hereinafter, sometimes described as a cured product (1)). The thermoplastic resin (1) and the cured product (1) are collectively called a resin component (1). One kind of the resin component (1) may be used alone, and two or more kinds thereof may be used in combination.

Examples of the resin component (1) include a (meth)acryloyl polymer, an aliphatic polyolefin, polystyrene, an ethylene-vinyl acetate copolymer resin, an ethylene-acrylic acid copolymer resin, a polyurethane resin, a polyvinyl alcohol resin, and a polyester resin, and the like. It is preferred that the resin component (1) be a resin component other than a polyvinyl acetal resin. It is preferred that the resin component (1) be a resin component other than polyvinyl acetate. From the viewpoint of effectively enhancing the sound insulating property, the transparency, and the long-term stability, it is preferred that the resin component (1) be a polymer of a monomer having a vinyl group. Examples of the monomer having a vinyl group include a (meth)acryloyl monomer and a vinyl acetate monomer, and the like. Examples of the polymer of a monomer having a vinyl group include a (meth)acryloyl polymer, and the like.

The resin component exemplified above can become a thermoplastic resin. The thermoplastic resin can become a thermoplastic elastomer by adjustment of the molecular structure, the polymerization degree and the like of the resin.

The thermoplastic resin means a resin that softens and exhibits plasticity when it is heated, and hardens, for example, when it is cooled to room temperature (25°C). Among the thermoplastic resins, especially the thermoplastic elastomer means a resin that softens and exhibits plasticity when it is heated, and hardens to exhibits rubber elasticity, for example, when it is cooled to room temperature (25°C).

From the viewpoint of effectively enhancing the sound insulating property, the transparency, and the long-term stability, it is preferred that the resin component (1) be a (meth)acryloyl polymer (hereinafter, sometimes described as (meth)acryloyl polymer (1)).

In 100% by weight of the resin component (1) in the first layer, the content of the (meth)acryloyl polymer is preferably 50% by weight or more, more preferably 60% by weight or more, further preferably 70% by weight or more, especially preferably 80% by weight or more, most preferably 90% by weight or more. All the resin component (1) in the first layer may be the (meth)acryloyl polymer.

It is preferred that the (meth)acryloyl monomer constituting the (meth)acryloyl polymer (1) be a (meth)acrylic ester having a cyclic ether structure, a (meth)acrylic ester having an aromatic ring, or an acyclic (meth)acrylic ester having 6 or less carbon atoms in the side chain.

Examples of the (meth)acrylic ester having a cyclic ether structure include glycidyl (meth)acrylate, (3-propyloxetan-3-yl)methyl (meth)acrylate, (3-ethyloxetan-3-yl)methyl (meth)acrylate, (3-butyloxetan-3-yl)methyl (meth)acrylate, (3-ethyloxetan-3-yl)ethyl (meth)acrylate, (3-ethyloxetan-3-yl)propyl (meth)acrylate, (3-ethyloxetan-3-yl)butyl (meth)acrylate, (3-ethyloxetan-3-yl)pentyl (meth)acrylate, (3-ethyloxetan-3-yl)hexyl (meth)acrylate; γ-butyrolactone (meth)acrylate, (2,2-dimethyl-1,3-dioxolan-4-yl)methyl (meth)acrylate, (2-methyl-2-ethyl-1,3-dioxolan-4-yl)methyl (meth)acrylate, (2-methyl-2-isobutyl-1,3-dioxolan-4-yl)methyl (meth)acrylate, (2-cyclohexyl-1,3-dioxolan-4-yl)methyl (meth)acrylate, cyclic trimethylolpropane formal acrylate, and (meth)acryloyl morpholine and the like. From the viewpoint of enhancing the sound insulating property more effectively, it is preferred that the (meth)acrylic ester having a cyclic ether structure be cyclic trimethylol propane formal acrylate. The cyclic ether structure need not be an epoxy group. The number of atoms constituting the ring of the cyclic ether structure may be 4 or more and may be 10 or less.

From the viewpoint of effectively enhancing the sound insulating property, the transparency and the long-term stability, it is preferred that the monomer having a vinyl group include a (meth)acrylic ester having a cyclic structure.

For obtaining the effect of the present invention more effectively, the blending amount of the (meth)acrylic ester having a cyclic structure in 100% by weight of the monomer having a vinyl group is preferably 10% by weight or more, more preferably 20% by weight or more, further preferably 30% by weight or more. In 100% by weight of the monomer having a vinyl group, the blending amount of the (meth)acrylic ester having a cyclic structure may be 100% by weight or less, may be 90% by weight or less, and may be 80% by weight or less.

Examples of the (meth)acrylic ester having an aromatic ring include benzyl acrylate, phenoxypolyethyleneglycol acrylate and hydroxyphenoxypropyl acrylate, and the like.

Examples of the acyclic (meth)acrylic ester having 6 or less carbon atoms in the side chain include methyl (meth)acrylate, ethyl (meth)acrylate, propyl (meth)acrylate, and butyl (meth)acrylate. For obtaining the effect of the present invention more effectively, it is preferred that the blending amount of the acyclic (meth)acrylic ester having 6 or less carbon atoms in the side chain in 100% by weight of the (meth)acryloyl monomer be less than 20% by weight.

By using the above-described preferred compound as the (meth)acryloyl monomer, the balance of the characteristics of the interlayer film such as the sound insulating property becomes more favorable.

Examples of the (meth)acryloyl monomer include besides the monomers as recited above, diethyleneglycol monoethylether (meth)acrylate, isobornyl (meth)acrylate, 3-methoxybutyl (meth)acrylate, cyclohexyl (meth)acrylate; ethylene glycol di(meth)acrylate, diethylene glycol di(meth)acrylate, tetraethylene glycol di(meth)acrylate, 1,6-hexane diol dimethacrylate, 1,9-nonane diol diacrylate, polytetramethylene glycol di(meth)acrylate, neopentyl glycol di(meth)acrylate, 1,3-butylene glycol di(meth)acrylate, 2,2-bis[4-(methacryloxyethoxy)phenyl]propane di(meth)acrylate; trimethylolpropane triacrylate, pentaerythritol tetramethacrylate, tri(2-acryloyloxyethyl)phosphate, tetramethylol methane tri(meth)acrylate, and tetramethylol propane tetra (meth) acrylate, and the like. One kind of the (meth) acryloyl monomer may be used alone, and two or more kinds thereof may be used in combination.

From the viewpoint of effectively enhancing the sound insulating property, the weight average molecular weight of the (meth)acryloyl polymer (1) is preferably 250000 or more, more preferably 300000 or more, further preferably 400000 or more, especially preferably 500000 or more. From the viewpoint of effectively enhancing the transparency, the weight average molecular weight of the (meth)acryloyl polymer (1) is preferably 2000000 or less, more preferably 1700000 or less, further preferably 1200000 or less, especially preferably 900000 or less.

The weight average molecular weight refers to a weight average molecular weight, calculated on the polystyrene equivalent basis, measured by gel permeation chromatography (GPC) .

The method for synthesizing the (meth)acryloyl polymer (1) is not particularly limited. Examples of the synthesizing method include solution polymerization, suspension polymerization, UV polymerization and the like. The method for synthesizing the (meth)acryloyl polymer (1) may be solution polymerization or suspension polymerization. The method for synthesizing the (meth)acryloyl polymer (1) may be solution polymerization, and may be a method other than solution polymerization, and may be suspension polymerization.

From the viewpoint of enhancing the transparency of the interlayer film, and effectively enhancing the sound insulating property in the interlayer film having enhanced transparency, the synthesizing method of the (meth)acryloyl polymer (1) is preferably solution polymerization. When the synthesizing method of the (meth)acryloyl polymer (1) is suspension polymerization, the Haze of the interlayer film (Haze measured in accordance with JIS K6714, of a glass-plate-containing laminate in which the aforementioned interlayer film is sandwiched between two sheets of clear glass) tends to be high. When the synthesizing method of the (meth)acryloyl polymer (1) is solution polymerization, the Haze of the interlayer film (Haze measured in accordance with JIS K6714, of a glass-plate-containing laminate in which the aforementioned interlayer film is sandwiched between two sheets of clear glass) is significantly low.

Even when the synthesizing method of the (meth)acryloyl polymer (1) is suspension polymerization, it is possible to make the Haze of the interlayer film (Haze measured in accordance with JIS K6714, of a glass-plate-containing laminate in which the aforementioned interlayer film is sandwiched between two sheets of clear glass) low by appropriately selecting a surfactant or a dispersant. The dispersant for use in synthesizing the (meth)acryloyl polymer (1) by suspension polymerization is preferably a high molecular dispersant that is compatible with an organic solvent, or a reactive surfactant from the viewpoint of adhesivity. When the dispersant is a high molecule, the dispersant is less likely to migrate to another layer when the interlayer film is layered, so that it is possible to suppress deterioration in interlayer adhesive force caused by bleeding of the dispersant to the layer interface or glass interface. Examples of the high molecular dispersant include a block copolymer of ethylene oxide and propylene oxide.

The (meth)acryloyl polymer (1) may contain a polymerizable compound other than a (meth)acryloyl monomer as an ingredient. It is preferred that the (meth)acryloyl polymer (1) contain a (meth)acryloyl monomer as a main ingredient. The rate of the structural unit (skeleton) derived from a (meth)acryloyl monomer in 100% by mole of the total structural units (skeleton) of the (meth)acryloyl polymer (1) is preferably 50% by mole or more, more preferably 60% by mole or more, further preferably 70% by mole or more, especially preferably 80% by mole or more, most preferably 90% by mole or more.

Examples of the polymerizable compound other than the (meth)acryloyl monomer include vinyl acetate, a styrene compound, styrene, an isoprene compound, vinyl benzoate and allyl benzoate, and the like. By using such a polymerizable compound, when the first layer is layered on other layer or a lamination glass member it becomes easy to adjust the refractive index with the other layer or the lamination glass member, and optical strain is suppressed.

Other examples of the polymerizable compound other than the (meth)acryloyl monomer include polyoxyethylenestyrenated propenylphenylether sulfate ester ammonium, polyoxyethylenenonylpropenylphenylether sulfate ester ammonium, polyoxyethylene-1-(allyloxymethyl)alkylether sulfate ester ammonium, polyoxyethylenestyrenated propenylphenylether, and polyoxyethylene-1-(allyloxymethyl)alkylether, and the like. By using such a polymerizable compound as a reactive surfactant, an interlayer film having high transparency can be obtained even by suspension polymerization.

From the viewpoint of effectively enhancing the sound insulating property, the resin component (1) is preferably an aliphatic polyolefin or a styrene elastomer, and is more preferably an aliphatic polyolefin.

The aliphatic polyolefin may be a saturated aliphatic polyolefin, and may be an unsaturated aliphatic polyolefin. The aliphatic polyolefin may be a polyolefin composed of a chain olefin as a polymerizing monomer, and may be a polyolefin composed of a cyclic olefin as a polymerizing monomer. From the viewpoint of effectively enhancing the storage stability and the sound insulating property of the interlayer film, it is preferred that the aliphatic polyolefin be a saturated aliphatic polyolefin.

Examples of the material for the aliphatic polyolefin include ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4-nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene, and vinylcyclohexane.

From the viewpoint of effectively enhancing the sound insulating property, it is preferred that the aliphatic polyolefin have a chained hydrocarbon group on a side chain.

When the interlayer film has a multilayer structure, the aliphatic polyolefin may be a modified aliphatic polyolefin from the viewpoint of improving the interlayer adhesive strength. It is preferred that the modified aliphatic polyolefin have a carboxyl group, a carboxylic anhydride group, a hydroxyl group or an epoxy group or the like. The modified aliphatic polyolefin may have these groups on a side chain of the molecular chain, or on a terminus.

### (Thermoplastic resin in second layer and third layer)

From the viewpoint of effectively enhancing the adhesivity between the interlayer film and a lamination glass member, it is preferred that the second layer contain a thermoplastic resin (hereinafter, sometimes described as a thermoplastic resin (2)). From the viewpoint of effectively enhancing the adhesivity between the interlayer film and a lamination glass member, it is more preferred that the second layer contain a thermoplastic resin other than the resin component (1) of the first layer. From the viewpoint of effectively enhancing the adhesivity between the interlayer film and a lamination glass member, it is further preferred that the second layer contain a polyvinyl acetal resin (hereinafter, sometimes described as polyvinyl acetal resin (2)). From the viewpoint of effectively enhancing the adhesivity between the interlayer film and a lamination glass member, it is preferred that the third layer contain a thermoplastic resin (hereinafter, sometimes described as a thermoplastic resin (3)). From the viewpoint of effectively enhancing the adhesivity between the interlayer film and a lamination glass member, it is more preferred that the third layer contain a thermoplastic resin other than the resin component (1) of the first layer. From the viewpoint of effectively enhancing the adhesivity between the interlayer film and a lamination glass member, it is further preferred that the third layer contain a polyvinyl acetal resin (hereinafter, sometimes described as polyvinyl acetal resin (3)).

Examples of the thermoplastic resins (2), (3) include a polyvinyl acetal resin, an ethylene-vinyl acetate copolymer resin, an ethylene-acrylic acid copolymer resin, a polyurethane resin, a polyvinyl alcohol resin, a polyvinyl acetate resin, a polyester resin, and the like. Thermoplastic resins other than these may be used.

In 100% by weight of the thermoplastic resin in the second layer, the content of the polyvinyl acetal resin (2) is preferably 50% by weight or more, more preferably 60% by weight or more, further preferably 70% by weight or more, especially preferably 80% by weight or more, most preferably 90% by weight or more. All the thermoplastic resin in the second layer may be the polyvinyl acetal resin (2).

In 100% by weight of the thermoplastic resin in the third layer, the content of the polyvinyl acetal resin (3) is preferably 50% by weight or more, more preferably 60% by weight or more, further preferably 70% by weight or more, especially preferably 80% by weight or more, most preferably 90% by weight or more. All the thermoplastic resin in the third layer may be the polyvinyl acetal resin (3).

For example, the polyvinyl acetal resin can be produced by acetalizing polyvinyl alcohol (PVA) with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally lies within the range of 70% by mole to 99.9% by mole.

The average polymerization degree of the polyvinyl alcohol (PVA) is preferably 200 or more, more preferably 500 or more, still more preferably 1500 or more, further preferably 1600 or more, and is preferably 5000 or less, more preferably 4000 or less, further preferably 3500 or less, especially preferably 3000 or less. When the average polymerization degree is the above lower limit or more, the penetration resistance of laminated glass is further enhanced. When the average polymerization degree is the above upper limit or less, formation of an interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin fall within the range of 3 to 5 and it is more preferred that the number of carbon atoms of the acetal group be 3 or 4. When the number of carbon atoms of the acetal group in the polyvinyl acetal resin is 3 or more, the glass transition temperature of the interlayer film is sufficiently lowered.

The aldehyde is not particularly limited. In general, an aldehyde with 1 to 10 carbon atoms is preferably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, and benzaldehyde. The aldehyde is preferably propionaldehyde, n-butyraldehyde, isobutyraldehyde, n-hexylaldehyde, or n-valeraldehyde, more preferably propionaldehyde, n-butyraldehyde, or isobutyraldehyde, and further preferably n-butyraldehyde. One kind of the aldehyde may be used alone, and two or more kinds thereof may be used in combination.

The content of the hydroxyl group (the amount of hydroxyl groups) of the polyvinyl acetal resin is preferably 15% by mole or more, more preferably 18% by mole or more, and preferably 40% by mole or less, and more preferably 35% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

The content of the hydroxyl group of the polyvinyl acetal resin is preferably 25% by mole or more, more preferably 28% by mole or more, still more preferably 30% by mole or more, further preferably 31.5% by mole or more, especially preferably 32% by mole or more, most preferably 33% by mole or more. The content of the hydroxyl group of the polyvinyl acetal resin is preferably 38% by mole or less, more preferably 37% by mole or less, further preferably 36.5% by mole or less, and especially preferably 36% by mole or less. When the content of the hydroxyl group is the above lower limit or more, the adhesive force of the interlayer film is further enhanced. Moreover, when the content of the hydroxyl group is the above upper limit or less, the flexibility of the interlayer film is enhanced and the handling of the interlayer film is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be determined in conformity with JIS K6728 "Testing methods for polyvinyl butyral".

The acetylation degree of the polyvinyl acetal resin is preferably 0.01% by mole or more, more preferably 0.5% by mole or more, and preferably 10% by mole or less, and more preferably 2% by mole or less. When the acetylation degree is the above lower limit or more, the compatibility between the polyvinyl acetal resin and a plasticizer is enhanced. When the acetylation degree is the above upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (the butyralization degree in the case of a polyvinyl butyral resin) is preferably 55% by mole or more, more preferably 60% by mole or more and is preferably 75% by mole or less, and more preferably 71% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

It is preferred that the polyvinyl acetal resin (2) be a polyvinyl butyral resin. It is preferred that the polyvinyl acetal resin (3) be a polyvinyl butyral resin.

### (Plasticizer)

The resin layer contains a plasticizer. One kind of the plasticizer in the resin layer may be used alone, and two or more kinds thereof may be used in combination.

From the viewpoint of effectively enhancing the sound insulating property, the first layer contains a plasticizer (hereinafter, sometimes described as a plasticizer (1)). From the viewpoint of effectively enhancing the sound insulating property, it is preferred that the second layer contain a plasticizer (hereinafter, sometimes described as a plasticizer (2)). From the viewpoint of effectively enhancing the sound insulating property, it is preferred that the third layer contain a plasticizer (hereinafter, sometimes described as a plasticizer (3)). One kind of the plasticizer in these layers may be used alone, and two or more kinds thereof may be used in combination.

Examples of the plasticizer include paraffin oil, a benzoic ester plasticizer, an organic ester plasticizer, and a phosphate plasticizer, and the like. Examples of the organic ester plasticizer include a monobasic organic acid ester, a polybasic organic acid ester, and the like. Examples of the phosphate plasticizer include an organic phosphate plasticizer and an organic phosphite plasticizer, and the like. It is preferred that the plasticizer be a liquid plasticizer.

Examples of the paraffin oil include naphthenic process oil, white mineral oil, mineral oil, paraffin wax, liquid paraffin, and the like.

Examples of commercially available paraffin oil include "Diana process oil PW-90" available from Idemitsu Kosan Co., Ltd., "Diana process oil PW-100" available from Idemitsu Kosan Co., Ltd., "Diana process oil PW-32" available from Idemitsu Kosan Co., Ltd., and the like.

Examples of the benzoic ester plasticizer include "PB-3A", "PB-3103" and "PB-10" available from DIC Corporation, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic ester plasticizer include a diester plasticizer represented by the following structural formula (1).

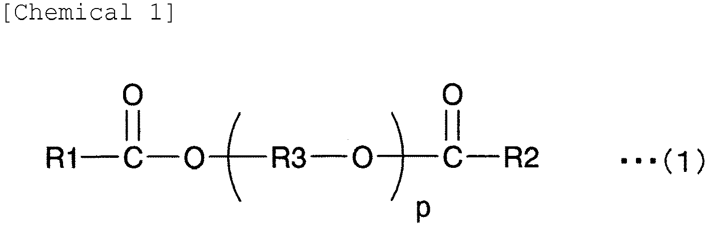

In the foregoing formula (1), R1 and R2 each represent an organic group with 5 to 10 carbon atoms, R3 represents an ethylene group, an isopropylene group, or an n-propylene group, and p represents an integer of 3 to 10. It is preferred that R1 and R2 in the foregoing formula (1) each be an organic group with 6 to 10 carbon atoms.

Examples of the organic phosphate plasticizer include tributoxyethyl phosphate, isodecyl phenyl phosphate, triisopropyl phosphate, and the like.

From the viewpoint of effectively enhancing the sound insulating property, the transparency, and the long-term stability, it is preferred that the plasticizer include an organic ester plasticizer. From the viewpoint of effectively enhancing the sound insulating property, the transparency, and the long-term stability, it is preferred that the plasticizer include triethylene glycol di-2-ethylhexanoate, or triethylene glycol di-2-ethylbutyrate.

In the first layer, the content of the plasticizer (1) relative to 100 parts by weight of the resin component (1) is referred to as a content (1). The content (1) is preferably 1 part by weight or more, more preferably 5 parts by weight or more, still more preferably 10 parts by weight or more, further preferably 20 parts by weight or more, and is preferably 90 parts by weight or less, more preferably 85 parts by weight or less, further preferably 80 parts by weight or less. When the content (1) is the above lower limit or more, the flexibility of the interlayer film is enhanced and the handling of the interlayer film is facilitated. When the content (1) is the above upper limit or less, the penetration resistance of laminated glass is further enhanced.

When the first layer contains the (meth)acryloyl polymer, it is preferred that the first layer contain an organic ester plasticizer as the plasticizer from the view point of enhancing the effect of the present invention.

In the above first layer, the content of the plasticizer (1) per 100 parts by weight of the (meth)acryloyl polymer is referred to as a content (1a). The content (1a) may be 0 parts by weight or more (including uncontained) and may be more than 0 parts by weight, and is preferably 1 part by weight or more, more preferably 5 parts by weight or more, still more preferably 10 parts by weight or more, further preferably 20 parts by weight or more, and is preferably 90 parts by weight or less, more preferably 85 parts by weight or less, further preferably 80 parts by weight or less. When the content (1a) is the above lower limit or more, the flexibility of the interlayer film is enhanced and the handling of the interlayer film is facilitated. When the content (1a) is the above upper limit or less, the penetration resistance of laminated glass is further enhanced.

When the resin component (1) in the first layer is a thermoplastic elastomer such as aliphatic polyolefin, the plasticizing effect can be low. When a thermoplastic elastomer such as aliphatic polyolefin is used as the resin component (1) in the first layer, it is preferred that the plasticizer in the first layer be a plasticizer other than an organic ester plasticizer from the viewpoint of enhancing the effect of the present invention.

When the first layer contains a thermoplastic elastomer such as aliphatic polyolefin, it is preferred that the plasticizer in the first layer be paraffin oil from the viewpoint of effectively enhancing the sound insulating property.

In the first layer, the content of the plasticizer (1) per 100 parts by weight of the thermoplastic elastomer such as aliphatic polyolefin is referred to as a content (1b). From the viewpoint of effectively enhancing the sound insulating property, the content (1b) is preferably 10 parts by weight or more, more preferably 20 parts by weight or more, and is preferably 60 parts by weight or less, more preferably 50 parts by weight or less. When the content (1b) is the above lower limit or more, it is possible to effectively enhance the sound insulating property. When the content (1b) is the above upper limit or less, the penetration resistance of laminated glass is further enhanced.

In the second layer, the content of the plasticizer (2) per 100 parts by weight of the thermoplastic resin (2) (100 parts by weight of the polyvinyl acetal resin (2) when the thermoplastic resin (2) is the polyvinyl acetal resin (2)) is referred to as a content (2). In the third layer, the content of the plasticizer (3) per 100 parts by weight of the thermoplastic resin (3) (100 parts by weight of polyvinyl acetal resin (3) when the thermoplastic resin (3) is a polyvinyl acetal resin (3)) is referred to as a content (3). Each of the content (2) and the content (3) is preferably 10 parts by weight or more, more preferably 15 parts by weight or more, further preferably 20 parts by weight or more, especially preferably 24 parts by weight or more, most preferably 25 parts by weight or more, and is preferably 45 parts by weight or less, more preferably 40 parts by weight or less, further preferably 35 parts by weight or less. When the content (2) and the content (3) are the above lower limit or more, the flexibility of the interlayer film is enhanced and the handling of the interlayer film is facilitated. When the content (2) and the content (3) are the above upper limit or less, the flexural rigidity is further enhanced.

From the viewpoint of effectively enhancing the adhesivity between the interlayer film and a lamination glass member, each of the plasticizer in the second layer and the plasticizer in the third layer is preferably an organic ester plasticizer, and more preferably a diester plasticizer represented by the above formula (1). It is preferred that each of the plasticizers in the second layer and the third layer contain triethylene glycol di-2-ethylhexanoate (3GO) or triethylene glycol di-2-ethylbutyrate (3GH) and it is more preferred that each of the plasticizers in the second layer and the third layer contain triethylene glycol di-2-ethylhexanoate. In this case, the adhesivity between the interlayer film and a lamination glass member is effectively enhanced.

### (Heat shielding substance)

The interlayer film may contain a heat shielding substance. One kind of the heat shielding substance may be used alone, and two or more kinds thereof may be used in combination.

It is preferred that the heat shielding substance contain at least one kind of Ingredient X among a phthalocyanine compound, a naphthalocyanine compound, and an anthracyanine compound or contain heat shielding particles. In this case, the heat shielding compound may be constituted of both of the Ingredient X and the heat shielding particles.

### Ingredient X:

The interlayer film may contain at least one kind of Ingredient X among a phthalocyanine compound, a naphthalocyanine compound and an anthracyanine compound. It is preferred that the resin layer contain the Ingredient X. It is preferred that the first layer contain the Ingredient X. It is preferred that the second layer contain the Ingredient X. It is preferred that the third layer contain the Ingredient X. The Ingredient X is a heat shielding substance. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

Examples of the Ingredient X include phthalocyanine, a derivative of phthalocyanine, naphthalocyanine, a derivative of naphthalocyanine, anthracyanine, a derivative of anthracyanine, and the like. It is preferred that each of the phthalocyanine compound and the derivative of phthalocyanine have a phthalocyanine skeleton. It is preferred that each of the naphthalocyanine compound and the derivative of naphthalocyanine have a naphthalocyanine skeleton. It is preferred that each of the anthracyanine compound and the derivative of anthracyanine have an anthracyanine skeleton.

With regard to the interlayer film and laminated glass, from the viewpoint of further enhancing the heat shielding properties thereof, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. With regard to the interlayer film and laminated glass, from the viewpoint of still further enhancing the heat shielding properties thereof, it is preferred that the Ingredient X have a structural unit in which an oxygen atom is bonded to a vanadium atom.

In 100% by weight of the interlayer film or in 100% by weight of a layer containing the Ingredient X (a first layer, a second layer, or a third layer), the content of the Ingredient X is preferably 0.001% by weight or more, more preferably 0.005% by weight or more, further preferably 0.01% by weight or more, especially preferably 0.02% by weight or more. In 100% by weight of the interlayer film or in 100% by weight of a layer containing the Ingredient X (a first layer, a second layer, or a third layer), the content of the Ingredient X is preferably 0.2% by weight or less, more preferably 0.1% by weight or less, further preferably 0.05% by weight or less, especially preferably 0.04% by weight or less. When the content of the Ingredient X is the above lower limit or more and the above upper limit or less, the heat shielding properties are sufficiently enhanced and the visible light transmittance is sufficiently enhanced. For example, it is possible to make the visible light transmittance 70% or more.

### Heat shielding particles:

The interlayer film may contain heat shielding particles. It is preferred that the resin layer contain the heat shielding particles. It is preferred that the first layer contain the heat shielding particles. The second layer may contain heat shielding particles. The third layer may contain heat shielding particles. The heat shielding particle is of a heat shielding substance. By the use of heat shielding particles, infrared rays (heat rays) can be effectively cut off. One kind of the heat shielding particles may be used alone, and two or more kinds thereof may be used in combination.

From the viewpoint of further enhancing the heat shielding property of the laminated glass, it is more preferred that the heat shielding particles be metal oxide particles. It is preferred that the heat shielding particle be a particle (a metal oxide particle) formed from an oxide of a metal.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. Since the heat ray shielding function is high, preferred are metal oxide particles, more preferred are ATO particles, GZO particles, IZO particles, ITO particles or tungsten oxide particles, and especially preferred are ITO particles or tungsten oxide particles. In particular, since the heat ray shielding function is high and the particles are readily available, preferred are tin-doped indium oxide particles (ITO particles), and also preferred are tungsten oxide particles.

With regard to the interlayer film and laminated glass, from the viewpoint of further enhancing the heat shielding properties thereof, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

With regard to the interlayer film and laminated glass, from the viewpoint of further enhancing the heat shielding property thereof, it is especially preferred that the tungsten oxide particles be cesium-doped tungsten oxide particles. With regard to the interlayer film and laminated glass, from the viewpoint of still further enhancing the heat shielding properties thereof, it is preferred that the cesium-doped tungsten oxide particles be tungsten oxide particles represented by the formula: CS_{0.33}WO₃.

The average particle diameter of the heat shielding particles is preferably 0.01 µm or more, more preferably 0.02 µm or more, and is preferably 0.1 µm or less, more preferably 0.05 µm or less. When the average particle diameter is the above lower limit or more, the heat ray shielding properties are sufficiently enhanced. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of a layer containing the heat shielding particles (a first layer, a second layer, or a third layer), the content of the heat shielding particles is preferably 0.01% by weight or more, more preferably 0.1% by weight or more, further preferably 1% by weight or more, especially preferably 1.5% by weight or more. In 100% by weight of the interlayer film, or in 100% by weight of a layer containing the heat shielding particles (a first layer, a second layer, or a third layer), the content of the heat shielding particles is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding property is sufficiently enhanced and the visible light transmittance is sufficiently enhanced.

### (Metal salt)

The interlayer film may contain an alkali metal salt, an alkali earth metal salt, or a magnesium salt (hereinafter, these are sometimes described as Metal salt M). The resin layer may contain the Metal salt M. The first layer may contain the Metal salt M. The second layer may contain the Metal salt M. It is preferred that the third layer contain the Metal salt M. By the use of the Metal salt M, controlling the adhesivity between the interlayer film and a lamination glass member or the adhesivity between respective layers in the interlayer film is facilitated. One kind of the Metal salt M may be used alone, and two or more kinds thereof may be used in combination.

It is preferred that the Metal salt M contain Li, Na, K, Rb, Cs, Mg, Ca, Sr or Ba as metal. It is preferred that the metal salt contained in the interlayer film include a K salt or Mg salt.

Moreover, it is more preferred that the Metal salt M be an alkali metal salt of an organic acid with 2 to 16 carbon atoms, an alkaline earth metal salt of an organic acid with 2 to 16 carbon atoms, and a magnesium salt of an organic acid with 2 to 16 carbon atoms, and it is further preferred that the Metal salt M be a magnesium carboxylate with 2 to 16 carbon atoms or a potassium carboxylate with 2 to 16 carbon atoms.

The magnesium carboxylate with 2 to 16 carbon atoms and the potassium carboxylate with 2 to 16 carbon atoms are not particularly limited. Examples of these include magnesium acetate, potassium acetate, magnesium propionate, potassium propionate, magnesium 2-ethylbutyrate, potassium 2-ethylbutanoate, magnesium 2-ethylhexanoate, and potassium 2-ethylhexanoate, and the like.

The total of the contents of Mg and K in an interlayer film containing the Metal salt M or a layer containing the Metal salt M (a first layer, a second layer, or a third layer) is preferably 5 ppm or more, more preferably 10 ppm or more, and further preferably 20 ppm or more. The total of the contents of Mg and K in an interlayer film containing the Metal salt M or a layer containing the Metal salt M (a first layer, a second layer, or a third layer) is preferably 300 ppm or less, more preferably 250 ppm or less, and further preferably 200 ppm or less. When the total of the contents of Mg and K is the above lower limit or more and the above upper limit or less, the adhesivity between the interlayer film and a lamination glass member or the adhesivity between respective layers in the interlayer film can be further well controlled.

### (Ultraviolet ray screening agent)

The interlayer film may contain an ultraviolet ray screening agent. The resin layer may contain an ultraviolet ray screening agent. The first layer may contain an ultraviolet ray screening agent. It is preferred that the second layer contain an ultraviolet ray screening agent. The third layer may contain an ultraviolet ray screening agent. By the use of an ultraviolet ray screening agent, even when the interlayer film and the laminated glass are used for a long period of time, the visible light transmittance becomes further hard to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface thereof may be coated with any material. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray screening performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazin-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxalanilide ("Sanduvor VSU" available from Clariant Japan K.K.) .

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of a layer containing the ultraviolet ray screening agent (the first layer, the second layer, or the third layer), the content of the ultraviolet ray screening agent is preferably 0.1% by weight or more, more preferably 0.2% by weight or more, further preferably 0.3% by weight or more, especially preferably 0.5% by weight or more. In 100% by weight of a layer containing the ultraviolet ray screening agent (the first layer, the second layer, or the third layer), the content of the ultraviolet ray screening agent is preferably 2.5% by weight or less, more preferably 2% by weight or less, further preferably 1% by weight or less, especially preferably 0.8% by weight or less. When the content of the ultraviolet ray screening agent is the above-described lower limit or more and the above-described upper limit or less, deterioration in visible light transmittance after a lapse of a period of time is further suppressed. In particular, by setting the content of the ultraviolet ray screening agent to be 0.2% by weight or more in 100% by weight of a layer containing the ultraviolet ray screening agent, with regard to the interlayer film and laminated glass, the lowering in visible light transmittance thereof after a lapse of a period of time can be significantly suppressed.

### (Oxidation inhibitor)

The interlayer film may contain an oxidation inhibitor. The resin layer may contain an oxidation inhibitor. The first layer may contain an oxidation inhibitor. It is preferred that the second layer contain an oxidation inhibitor. The third layer may contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are preferably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis(4,6-di-t-butyl-1-phenyloxy) (2-ethylhexyloxy) phosphorus, and the like. One kind or two or more kinds among these oxidation inhibitors are preferably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

For maintaining high visible light transmittance of the interlayer film and the laminated glass over a long period of time, it is preferred that the content of the oxidation inhibitor be 0.1% by weight or more in 100% by weight of the interlayer film or in 100% by weight of a layer containing the oxidation inhibitor (a first layer, a second layer or a third layer). Moreover, since an effect commensurate with the addition of an oxidation inhibitor is not attained, it is preferred that the content of the oxidation inhibitor be 2% by weight or less in 100% by weight of the interlayer film or in 100% by weight of the layer containing the oxidation inhibitor.

### (Other ingredients)

Each of the interlayer film, the resin layer, the first layer, the second layer, and the third layer may contain other ingredient as necessary. Examples of the other ingredient include a coupling agent, a dispersing agent, a surfactant, a flame retardant, an antistatic agent, a pigment, a dye, an agent (other than metal salt) that adjusts the adhesive strength between a lamination glass member and a layer being in contact with the lamination glass member, an interlayer adhesive strength adjusting agent (other than metal salt) a moisture-resistance agent, a fluorescent brightening agent, and an infrared ray absorber, and the like. One kind of the other ingredient may be used alone, and two or more kinds thereof may be used in combination.

### (Other details of interlayer film for laminated glass)

The thickness of the interlayer film is not particularly limited. From the viewpoint of the practical aspect and the viewpoint of sufficiently enhancing the penetration resistance and the flexural rigidity of laminated glass, the thickness of the interlayer film is preferably 0.1 mm or more, more preferably 0.25 mm or more, and is preferably 3 mm or less, more preferably 1.5 mm or less. When the thickness of the interlayer film is the above lower limit or more, the penetration resistance and the flexural rigidity of laminated glass are further enhanced. When the thickness of the interlayer film is the above upper limit or less, the transparency of the interlayer film is further improved.

The total thickness of the interlayer film is designated as T. The thickness of each of the first layer is preferably 0.035T or more, more preferably 0.0625T or more, further preferably 0.1T or more and is preferably 0.4T or less, more preferably 0.375T or less, further preferably 0.25T or less, especially preferably 0.15T or less. When the thickness of the first layer is 0.4T or less, the flexural rigidity is further improved.

The thickness of each of the second layer and the third layer is preferably 0.3T or more, more preferably 0.3125T or more, further preferably 0.375T or more and is preferably 0.97T or less, more preferably 0.9375T or less, further preferably 0.9T or less. The thickness of each of the second layer and the third layer may be 0.46875T or less, and may be 0.45T or less. When the thickness of each of the second layer and the third layer is the above-described lower limit or more and the above-described upper limit or less, the flexural rigidity and the sound insulating property of the laminated glass are further enhanced.

A total thickness of the second layer and the third layer is preferably 0.625T or more, more preferably 0.75T or more, further preferably 0.85T or more and is preferably 0.97T or less, more preferably 0.9375T or less, further preferably 0.9T or less. When the total thickness of the second layer and the third layer is the above-described lower limit or more and the above-described upper limit or less, the flexural rigidity and the sound insulating property of the laminated glass are further enhanced.

The interlayer film may be an interlayer film having a uniform thickness, or may be an interlayer film having varying thickness. The sectional shape of the interlayer film may be a rectangular shape and may be a wedge-like shape. The interlayer film may be wound, and the interlayer film may be made into a roll body. The roll body may include a winding core and an interlayer film wound on the outer periphery of the winding core.

The production method of the interlayer film according to the present invention is not particularly limited. In the case of a single-layered interlayer film, examples of the production method of the interlayer film according to the present invention include a method of extruding a resin composition with an extruder. As a method for producing the interlayer film according to the present invention, a method of separately forming resin compositions used for constituting respective layers into respective layers, and then layering the obtained layers, and a method of coextruding resin compositions used for constituting respective layers with an extruder to layer the layers can be recited in the case of a multi-layered interlayer film. From the viewpoint of effectively enhancing the adhesivity between layers of the interlayer film, a method of laminating after subjecting the first layer to a plasma treatment or a corona treatment can also be recited. A production method of extrusion-molding is preferred because the method is suitable for continuous production.

It is preferred that the second layer and the third layer contain the same polyvinyl acetal resin. This realizes excellent production efficiency of the interlayer film. For the reason of excellent production efficiency of the interlayer film, it is more preferred that the second layer and the third layer contain the same polyvinyl acetal resin and the same plasticizer. For the reason of excellent production efficiency of the interlayer film, it is further preferred that the second layer and the third layer be formed of the same resin composition.

It is preferred that the interlayer film have protrusions and recesses on the outer surface. In this case, it suffices that the interlayer film has protrusions and recesses on at least one surface of the outer surface of both sides. It is preferred that the interlayer film have protrusions and recesses on at least one surface of the outer surface of both sides. It is more preferred that the interlayer film have protrusions and recesses on the outer surface of both sides. It is preferred that the outer surface of the interlayer film be embossed. In this case, it suffices that at least one surface of the outer surface of both sides is embossed. It is preferred that at least one surface of the outer surface of both sides of the interlayer film be embossed. It is more preferred that the outer surface of both sides of the interlayer film be embossed. Examples of the method for forming the protrusions and recesses include, but are not particularly limited to, a lip emboss method, an emboss roll method, a calender roll method, a profile extrusion method, and the like. The emboss roll method is preferred because a large number of embosses of the protrusions and recesses, which is a quantitatively constant protrusion and recess pattern, can be formed.

### (Laminated glass)

Fig. 3 is a sectional view schematically showing an example of laminated glass prepared with the interlayer film for laminated glass shown in Fig. 1.

The laminated glass 31 shown in Fig. 3 is provided with a first lamination glass member 21, a second lamination glass member 22 and an interlayer film 11. The interlayer film 11 is arranged between the first lamination glass member 21 and the second lamination glass member 22 to be sandwiched therebetween.

The first lamination glass member 21 is layered on a first surface 11a of the interlayer film 11. The second lamination glass member 22 is layered on a second surface 11b opposite to the first surface 11a of the interlayer film 11. The first lamination glass member 21 is layered on an outer surface 2a of the second layer 2. The second lamination glass member 22 is layered on an outer surface 3a of a third layer 3.

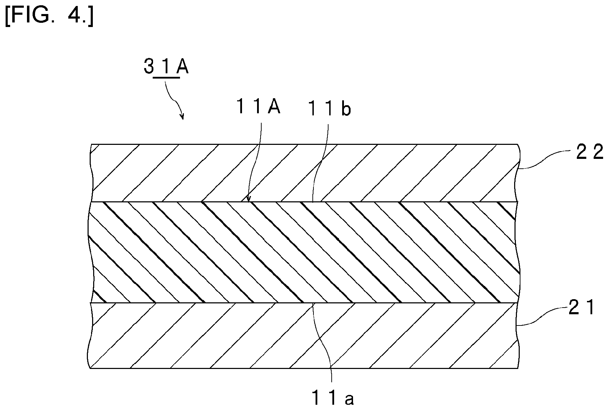

Fig. 4 is a sectional view schematically showing an example of laminated glass prepared with the interlayer film for laminated glass shown in Fig. 2.

The laminated glass 31A shown in Fig. 4 is provided with a first lamination glass member 21, a second lamination glass member 22 and an interlayer film 11A. The interlayer film 11A is arranged between the first lamination glass member 21 and the second lamination glass member 22 to be sandwiched therebetween.

The first lamination glass member 21 is layered on a first surface 11a of the interlayer film 11A. The second lamination glass member 22 is layered on a second surface 11b opposite to the first surface 11a of the interlayer film 11A.

As described above, the laminated glass according to the present invention includes a first lamination glass member, a second lamination glass member, and an interlayer film, and the interlayer film is the interlayer film for laminated glass according to the present invention. In the laminated glass according to the present invention, the above-mentioned interlayer film is arranged between the first lamination glass member and the second lamination glass member.

It is preferred that the first lamination glass member be the first glass plate. It is preferred that the second lamination glass member be the second glass plate.

Examples of the lamination glass member include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used. It is preferred that each of the first lamination glass member and the second lamination glass member be a glass plate or a PET film, and the laminated glass be provided with a glass plate as at least one among the first lamination glass member and the second lamination glass member.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thickness of the lamination glass member is preferably 1 mm or more, more preferably 1.8 mm or more, further preferably 2 mm or more, especially preferably 2.1 mm or more. The thickness of the lamination glass member is preferably 5 mm or less, more preferably 3 mm or less, still more preferably 2.3 mm or less, further preferably 2.1 mm or less, still further preferably 2.0 mm or less, yet still further preferably 1.8 mm or less, especially preferably 1.6 mm or less, most preferably 1.4 mm or less. When the lamination glass member is tempered glass, the thickness is preferably 1 mm or less, more preferably 0.7 mm or less. When the lamination glass member is a glass plate, the thickness of the glass plate is preferably 1 mm or more, more preferably 1.8 mm or more, further preferably 2 mm or more, especially preferably 2.1 mm or more and is preferably 5 mm or less, more preferably 3 mm or less, further preferably 2.6 mm or less. When the lamination glass member is a PET film, the thickness of the PET film is preferably 0.03 mm or more and is preferably 0.5 mm or less.

The thickness of the laminated glass is preferably 2 mm or more, and is preferably 10 mm or less, more preferably 6 mm or less, further preferably 5 mm or less, especially preferably 4 mm or less, most preferably 3 mm or less.

The method for producing the laminated glass is not particularly limited. For example, the interlayer film is sandwiched between the first lamination glass member and the second lamination glass member, and then, passed through pressure rolls or subjected to decompression suction in a rubber bag, so that the air remaining between the first and the second lamination glass members and the interlayer film is removed. Afterward, the members are preliminarily bonded together at 70°C to 110°C to obtain a laminate. Next, by putting the laminate into an autoclave or by pressing the laminate, the members are press-bonded together at 120°C to 150°C and under a pressure of 1 MPa to 1.5 MPa. In this way, laminated glass can be obtained. At the time of producing the laminated glass, a first layer, a second layer and a third layer may be layered.

Each of the interlayer film and the laminated glass can be used for automobiles, railway vehicles, aircraft, ships, buildings and the like. Each of the interlayer film and the laminated glass can also be used for applications other than these applications. It is preferred that the interlayer film and the laminated glass be an interlayer film and laminated glass for vehicles or for buildings respectively, and it is more preferred that the interlayer film and the laminated glass be an interlayer film and laminated glass for vehicles respectively. Each of the interlayer film and the laminated glass can be used for a windshield, side glass, rear glass or roof glass of an automobile, and the like. The interlayer film and the laminated glass are suitably used for automobiles. The interlayer film is used for obtaining laminated glass of an automobile.

In the laminated glass of automobile, the thickness of the lamination glass member may differ on the vehicle exterior side and on the vehicle interior side. The thickness of the lamination glass member on the vehicle exterior side is preferably 0.5 mm or more, more preferably 0.7 mm or more, further preferably 1.0 mm or more, especially preferably 1.5 mm or more. The thickness of the lamination glass member on the vehicle exterior side is preferably 5 mm or less, more preferably 3 mm or less, still more preferably 2.3 mm or less, further preferably 2.1 mm or less, still further preferably 2.0 mm or less, yet still further preferably 1.8 mm or less, especially preferably 1.6 mm or less. The thickness of the lamination glass member on the vehicle interior side is preferably 0.5 mm or more. The thickness of the lamination glass member on the vehicle interior side is preferably 3 mm or less, more preferably 2.3 mm or less, still more preferably 2.1 mm or less, further preferably 2.0 mm or less, still further preferably 1.8 mm or less, yet still further preferably 1.6 mm or less, especially preferably 1.4 mm or less, most preferably 1.0 mm or less. The thickness of the lamination glass member on the vehicle interior side may be 0.7 mm or more, and may be 0.7 mm or less.

Hereinafter, the present invention will be described in more detail with reference to examples and comparative examples. The present invention is not limited only to these examples.

### (Preparation of resin composition)

(Meth)acryloyl polymer compositions (1) to (6) (resin layers) for obtaining an interlayer film were obtained in the following manner. Also, (meth)acryloyl polymer compositions (1-0), (1-1), (2-0), (2-1), (3-0), (3-1), (4-0), (4-1), (5-0), (5-1), (6-1), (6-2) for measuring tanδ₀, tanδ₁, and Tg₀ were obtained in the following manner.

A mixture of ingredients shown in the following Tables 1, 3 was sandwiched between release-treated planes of two PET films (one side release treatment, available from NIPPA, thickness 50 µm). Then the mixture between the PET films was irradiated with ultraviolet rays at an irradiance level of 3000 mJ/cm² with a high pressure mercury UV lamp to cause reaction, and thus the mixture was cured. In this manner, (meth)acryloyl polymer compositions (1), (2), (6) and (meth)acryloyl polymer compositions (1-0), (1-1), (2-0), (2-1), (6-0), (6-1) having a thickness of 100 µm were obtained. Also, (meth)acryloyl polymer compositions (3) to (5) and (meth)acryloyl polymer compositions (3-0), (3-1), (4-0), (4-1), (5-0), (5-1) were obtained in the same manner as described above except that a mixture of ingredients shown in the following Tables 1 to 3 was sandwiched between two PET films for optical use (available from TOYOBO CO., LTD., A4100, thickness 50 µm). The obtained (meth)acryloyl polymer compositions (1) to (6) and (meth)acryloyl polymer compositions (1-0), (1-1), (2-0), (2-1), (3-0), (3-1), (4-0), (4-1), (5-0), (5-1), (6-0), (6-1) are in the state of being sandwiched between two PET films.

Ingredients in Tables 1 to 3 are as follows.

BzA: benzyl acrylate (available from OSAKA ORGANIC CHEMICAL INDUSTRY LTD., VISCOAT #160)
MEDOL-10: (2-methyl-2-ethyl-1,3-dioxolane-4-yl)methyl acrylate (available from OSAKA ORGANIC CHEMICAL INDUSTRY LTD.)
HPA: hydroxypropyl acrylate (available from OSAKA ORGANIC CHEMICAL INDUSTRY LTD.)
IBOA: isobornyl acrylate (available from NIPPON SHOKUBAI CO., LTD.)
CTFA: cyclic trimethylolpropane formal acrylate (available from OSAKA ORGANIC CHEMICAL INDUSTRY LTD.)
ISTA: isostearyl acrylate (available from OSAKA ORGANIC CHEMICAL INDUSTRY LTD.)
AIB: isobutyl acrylate (available from OSAKA ORGANIC CHEMICAL INDUSTRY LTD.)
LA: lauryl acrylate (available from OSAKA ORGANIC CHEMICAL INDUSTRY LTD.)
3GO: triethylene glycol di-2-ethylhexanoate
PW-32: paraffinic oil (available from Idemitsu Kosan Co., Ltd.)
IRGACURE 184: 2,2-dimethoxy-1,2-diphenylethan-1-one (available from BASF)

**[Table 1]**

| | | | (Meth)acryloyl polymer composition (1) | (Meth)acryloyl polymer composition (2) | (Meth)acryloyl polymer composition (3) | (Meth)acryloyl polymer composition (4) | (Meth)acryloyl polymer composition (5) | (Meth)acryloyl polymer composition (6) |
|---|---|---|---|---|---|---|---|---|
| | BzA | parts by weight | 15 | 14 | 0 | 0 | 0 | 0 |
| | MEDOL-10 | parts by weight | 18 | 9 | 30 | 0 | 30 | 0 |
| | HPA | parts by weight | 15 | 15 | 0 | 0 | 0 | 0 |
| | IBOA | parts by weight | 52 | 62 | 40 | 0 | 0 | 0 |
| | CTFA | parts by weight | 0 | 0 | 30 | 0 | 0 | 0 |
| Ingredient | ISTA | parts by weight | 0 | 0 | 0 | 70 | 70 | 0 |
| | AIB | parts by weight | 0 | 0 | 0 | 30 | 0 | 0 |
| | LA | parts by weight | 0 | 0 | 0 | 0 | 0 | 100 |
| | 3GO | parts by weight | 36.5 | 42.5 | 30 | 0 | 0 | 23 |
| | PW-32 | parts by weight | 0 | 0 | 10 | 5 | 10 | 0 |
| | IRGACURE 184 | parts by weight | 0.2 | 0.2 | 0.2 | 0.2 | 0.2 | 0.2 |
| Content of plasticizer per 100 parts by weight of (meth)acryloyl polymer in polymer composition | | parts by weight | 36.5 | 42.5 | 40.0 | 5.0 | 10.0 | 23.0 |
| Evaluation | Tg of (meth)acrylic polymer | °C | 47.3 | 56.4 | 41.2 | -4.2 | 1.9 | -7.6 |
| | Tanδ of (meth) acrylic polymer | | 2.63 | 2.66 | 3.01 | 2.64 | 2.37 | 0.59 |
| | Tg of polymer composition | °C | -9.4 | -9.1 | -4.9 | -7.8 | -7.9 | 25.1 |
| | Tanδ of polymer composition | | 3.03 | 2.88 | 2.88 | 2.60 | 2.34 | 0.61 |

**[Table 2]**

| | | | (Meth)acryloyl polymer composition (1-0) | (Meth)acryloyl polymer composition (1-1) | (Meth)acryloyl polymer composition (2-0) | (Meth)acryloyl polymer composition (2-1) | (Meth)acryloyl polymer composition (3-0) | (Meth)acryloyl polymer composition (3-1) |
|---|---|---|---|---|---|---|---|---|
| Ingredient | BzA | parts by weight | 15 | 15 | 14 | 14 | 0 | 0 |
| | MEDOL-10 | parts by weight | 18 | 18 | 9 | 9 | 30 | 30 |
| | HPA | parts by weight | 15 | 15 | 15 | 15 | 0 | 0 |
| | IBOA | parts by weight | 52 | 52 | 62 | 62 | 40 | 40 |
| | CTFA | parts by weight | 0 | 0 | 0 | 0 | 30 | 30 |
| | ISTA | parts by weight | 0 | 0 | 0 | 0 | 0 | 0 |
| | AIB | parts by weight | 0 | 0 | 0 | 0 | 0 | 0 |
| | LA | parts by weight | 0 | 0 | 0 | 0 | 0 | 0 |
| | 3GO | parts by weight | 0 | 37.8 | 0 | 43.7 | 0 | 35 |
| | PW-32 | parts by weight | 0 | 0 | 0 | 0 | 0 | 10 |
| | IRGACURE 184 | parts by weight | 0.2 | 0.2 | 0.2 | 0.2 | 0.2 | 0.2 |
| Content of plasticizer per 100 parts by weight of (meth)acryloyl polymer in polymer composition | | parts by weight | 0.0 | 37.8 | 0.0 | 43.7 | 0 | 45 |
| Evaluation | Tg of (meth)acrylic polymer | °C | 47.3 | 47.3 | 56.4 | 56.4 | 41.2 | 41.2 |
| | Tanδ of (meth)acrylic polymer | | 2.63 | 2.63 | 2.66 | 2.66 | 3.01 | 3.01 |
| | Tg of polymer composition | °C | 47.3 | -10.0 | 56.4 | -10.0 | 41.2 | -10 |
| | Tanδ of polymer composition | | 2.63 | 2.94 | 2.66 | 2.90 | 3.01 | 2.86 |

**[Table 3]**

| | | | (Meth)acryloyl polymer composition (4-0) | (Meth)acryloyl polymer composition (4-1) | (Meth)acryloyl polymer composition (5-0) | (Meth)acryloyl polymer composition (5-1) | (Meth)acryloyl polymer composition (6-0) | (Meth)acryloyl polymer composition (6-1) |
|---|---|---|---|---|---|---|---|---|
| Ingredient | BzA | parts by weight | 0 | 0 | 0 | 0 | 0 | 0 |
| | MEDOL-10 | parts by weight | 0 | 0 | 30 | 30 | 0 | 0 |
| | HPA | parts by weight | 0 | 0 | 0 | 0 | 0 | 0 |
| | I BOA | parts by weight | 0 | 0 | 0 | 0 | 0 | 0 |
| | CTFA | parts by weight | 0 | 0 | 0 | 0 | 0 | 0 |
| | ISTA | parts by weight | 70 | 70 | 70 | 70 | 0 | 0 |
| | AIB | parts by weight | 30 | 30 | 0 | 0 | 0 | 0 |
| | LA | parts by weight | 0 | 0 | 0 | 0 | 100 | 100 |
| | 3GO | parts by weight | 0 | 0 | 0 | 0 | 23 | 23 |
| | PW-32 | parts by weight | 0 | 9 | 0 | 14 | 0 | 0 |
| | IRGAGURE 184 | parts by weight | 0.2 | 0.2 | 0.2 | 0.2 | 0.2 | 0.2 |
| Content of plasticizer per 100 parts by weight of (meth)acryloyl polymer in polymer composition | | parts by weight | 0 | 9 | 0 | 14 | 23.0 | 23.0 |
| Evaluation | Tg of (meth)acrylic polymer | °C | -4.2 | -4.2 | 1.85 | 1.85 | 25.1 | 25.1 |
| | Tanδ of (meth)acrylic polymer | | 2.64 | 2.64 | 2.37 | 2.37 | 0.61 | 0.61 |
| | Tg of polymer composition | °C | -4.2 | -10 | 1.85 | -10 | 25.1 | -10 |
| | Tanδ of polymer composition | | 2.64 | 2.58 | 2.37 | 2.31 | 0.61 | 0.55 |

Polyvinyl acetal resin composition (1) (composition for forming a resin layer) for obtaining an interlayer film, and polyvinyl acetal resin compositions (1-0), (1-1) for measuring tanδ₀, tanδ, and Tg₀ were obtained in the following manner.

Polyvinyl acetal resin (1) (average polymerization degree: 3000, using n-butyl aldehyde, acetalization degree 64.0% by mole, content of hydroxyl group: 24.0% by mole, acetylation degree: 12.0% by mole) was prepared. Triethyleneglycol di-2-ethylhexanoate (3GO), an ultraviolet ray screening agent (2-(2-hydroxy-3-t-butyl-5-methylphenyl)-5-chlorobenzotriazole), an oxidation inhibitor (2,6-di-t-butyl-p-cresol) were mixed in the mixing amounts shown in the following Table 4 per 100 parts by weight of polyvinyl acetal resin (1). Polyvinyl acetal resin composition (1) and polyvinyl acetal resin compositions (1-0), (1-1) were obtained.

In Table 4, the blending amount of the plasticizer is shown by the blending amount per 100 parts by weight of the polyvinyl acetal resin. In Table 4, each of the blending amounts of the ultraviolet absorber and the oxidation inhibitor is shown by a blending amount in 100% by weight of the obtained resin composition.

**[Table 4]**

| | | | Polyvinyl acetal resin composition (1) | Polyvinyl acetal resin composition (1-0) | Polyvinyl acetal resin composition (1-1) |
|---|---|---|---|---|---|
| Ingredient | Polyvinyl acetal resin (1) | parts by weight | 100 | 100 | 100 |
| | Plasticizer (3GO) | parts by weight | 75 | 0 | 90 |
| | Ultraviolet ray screening agent | % by weight | 0.2 | 0 | 0 |
| | Oxidation inhibitor | % by weight | 0.2 | 0 | 0 |
| Evaluation | Tg of polyvinyl acetal resin (1) | °C | 70.5 | 70.5 | 70.5 |
| | Tanδ of polyvinyl acetal resin (1) | | 2.45 | 2.45 | 2.45 |
| | Tg of resin composition | °C | -4.4 | 70.5 | -10 |
| | Tanδ of resin composition | | 1.23 | 2.45 | 1.11 |

### (Example 1)

### Resin composition for forming first layer:

(Meth)acryloyl polymer composition (1) was prepared.

### Preparation of composition for forming second layer and third layer:

The following ingredients were blended, and extruded with a test extruder to prepare a second layer and a third layer. The thickness of each of the second layer and the third layer was 380 µm.

Polyvinyl acetal resin (2) (average polymerization degree: 1700, using n-butyl aldehyde, acetalization degree 68.5% by mole, content of hydroxyl group: 30.7% by mole, acetylation degree: 0.8% by mole) 100 parts by weight
Triethylene glycol di-2-ethylhexanoate (3GO) 30 parts by weight
An ultraviolet ray screening agent (2-(2-hydroxy-3-t-butyl-5-methylphenyl)-5-chlorobenzotriazole) in an amount of 0.2% by weight in the obtained second layer and third layer
An oxidation inhibitor (2,6-di-t-butyl-p-cresol) in an amount of 0.2% by weight in the obtained second layer and third layer

### Preparation of interlayer film:

The PET film laminated on one surface of the (meth)acryloyl polymer composition (1) was peeled off and the second layer was laminated on the stripped surface. Further, the PET film laminated on the other surface of the (meth)acryloyl polymer composition (1) was peeled off and the third layer was laminated on the stripped surface. An interlayer film having a laminate structure of second layer/(meth)acryloyl polymer composition (1) (first layer)/third layer was prepared.

### (Example 2)

An interlayer film was obtained in the same manner as that in Example 1 except that the (meth)acryloyl polymer composition (2) (resin layer) was used as the first layer, and the blending amount of the plasticizer in the second and third layers was changed to 29.5 parts by weight.

### (Example 3)

An interlayer film was obtained in the same manner as that in Example 1 except that the (meth)acryloyl polymer composition (3) (resin layer) was used as the first layer, PET films were not peeled off, and the blending amount of the plasticizer in the second and third layers was changed to 35 parts by weight.

### (Example 4)

An interlayer film was obtained in the same manner as that in Example 3 except that the (meth)acryloyl polymer composition (4) (resin layer) was used as the first layer.

### (Example 5)

An interlayer film was obtained in the same manner as that in Example 3 except that the (meth)acryloyl polymer composition (5) (resin layer) was used as the first layer.

### (Comparative Example 1)

### Composition for forming first layer:

As the composition for forming a first layer, the polyvinyl acetal resin composition (1) was prepared.

### Preparation of composition for forming second layer and third layer:

The following ingredients were blended to obtain a composition for forming a second layer and a third layer.

Polyvinyl acetal resin (2) (average polymerization degree: 1700, using n-butyl aldehyde, acetalization degree 68.5% by mole, content of hydroxyl group: 30.7% by mole, acetylation degree: 0.8% by mole) 100 parts by weight
Triethylene glycol di-2-ethylhexanoate (3GO) 36.5 parts by weight
An ultraviolet ray screening agent (2-(2-hydroxy-3-t-butyl-5-methylphenyl)-5-chlorobenzotriazole) in an amount of 0.2% by weight in the obtained second layer and third layer
An oxidation inhibitor (2,6-di-t-butyl-p-cresol) in an amount of 0.2% by weight in the obtained second layer and third layer

### Preparation of interlayer film:

By coextruding the composition for forming a first layer and a composition for forming a second layer and a third layer using a coextruder, an interlayer film (800 µm in thickness) having a laminate structure of a second layer (350 µm in thickness)/a first layer (100 µm in thickness)/a third layer (350 µm in thickness) was prepared.

### (Comparative Example 2)

An interlayer film was obtained in the same manner as that in Example 3 except that the (meth)acryloyl polymer composition (6) (resin layer) was used as the first layer.

### (Evaluation)

### (1) Glass transition temperature and tanδ

A polymer composition or a resin composition was stored in an environment at a temperature of 23°C, and a humidity of 30% for 1 month. Directly after storage, the composition was press molded at 150°C so that the thickness was 0.35 mm (at 150°C without pressurization for 10 minutes, at 150°C under pressurization for 10 minutes) to prepare a resin film. Then the resin film was measured for viscoelasticity using "ARES-G2" available from TA Instruments. Glass transition temperature and tanδ were measured under the condition in which the temperature was decreased from 100°C to -50°C at a temperature decreasing rate of 3°C/minute and under the condition of a frequency of 1 Hz and a strain of 1% by using a parallel plate with a diameter of 8 mm as a jig.

### (2) Sound insulating property

### Preparation of laminated glass (for measuring sound insulating property):

The obtained interlayer film was cut into a size of 500 mm long and 500 mm wide. As the first lamination glass member, and the second lamination glass member, two glass plates (clear float glass, 500 mm long, 500 mm wide, and 2 mm thick and 1.6 mm thick) were prepared. The interlayer film was sandwiched between the two glass plates to obtain a laminate. The laminate was put into a rubber bag and the inside thereof was degassed for 20 minutes with a degree of vacuum of 2.6 kPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 135°C and a pressure of 1.2 MPa in an autoclave to obtain a sheet of laminated glass.

### Measurement of TL value:

The obtained laminated glass was stored in an environment at a temperature 23 ± 2°C and a humidity of 25 ± 5% for 2 months. Sound transmission loss of the laminated glass after storage was measured at 10°C by the method in accordance with JIS A 1441-1, and the sound insulating property was judged according to the following criteria from the value of sound transmission loss (TL value) at 3150 Hz which is close to the coincidence frequency.

### [Criteria for judgment in sound insulating property]

o: TL value is 40 dB or more
×: TL value is less than 40 dB

### (3) Transparency

A resin composition for forming a first layer was re-molded into a film having a length of 100 mm, a width of 100 mm and a thickness of 800 µm with a press molding machine. At this time, the resin composition may be formed by ultraviolet irradiation, or a thermoplastic resin prepared by heat polymerization may be extruded together with a plasticizer by a test extruder to form a film. The sample obtained in this manner was stored in an environment at a temperature 23 ± 2°C and a humidity of 25 ± 5% for 1 month, and then sandwiched between two sheets of clear float glass having a length of 50 mm, a width of 50 mm, and a thickness of 2.5 mm to give a laminate. The laminate was put into a rubber bag and the inside thereof was degassed for 20 minutes with a degree of vacuum of 2.6 kPa, after which the laminate in the degassed condition was transferred into an oven, and vacuum-pressed by retention at 90°C for 30 minutes, and thus the laminate was preliminarily press-bonded. The preliminarily press-bonded laminate was subjected to press-bonding for 20 minutes under conditions of 135°C and a pressure of 1.2 MPa in an autoclave to obtain a sheet of laminated glass. The transparency of the laminated glass was determined by measuring a Haze value at 20°C in accordance with JIS K6714 using a haze meter ("TC-HIIIDPK" available from Tokyo Denshoku Co., Ltd.).

The details and the results are shown in the following Table 5.

**[Table 5]**

| | | | | Example 1 | Example 2 | Example 3 | Example 4 | Example 5 | Comparative Example 1 | Comparative Example 2 |
|---|---|---|---|---|---|---|---|---|---|---|
| Interlayer film | Second layer | Polyvinyl acetal resin (2) | parts by weight | 100 | 100 | 100 | 100 | 100 | 100 | 100 |
| | | Plasticizer (3GO) | parts by weight | 30 | 29.5 | 35 | 35 | 35 | 36.5 | 35 |
| | Fourth layer | Kind | | - | - | PET film | PET film | PET film | - | PET film |
| | First layer | Kind | | (Meth)acryloyl polymer composition (1) | (Meth)acryloyl polymer composition (2) | (Meth)acryloyl polymer composition (3) | (Meth)acryloyl polymer composition (4) | (Meth)acryloyl polymer composition (5) | Polyvinyl acetal resin composition (1) | (Meth)acryloyl polymer composition (6) |
| | Fifth layer | Kind | | - | - | PET film | PET film | PET film | - | PET film |
| | Third layer | Polyvinyl acetal resin (2) | parts by weight | 100 | 100 | 100 | 100 | 100 | 100 | 100 |
| | | Plasticizer (3GO) | parts by weight | 30 | 29.5 | 35 | 35 | 35 | 36.5 | 35 |
| Evaluation | Value of Tgo | | | 47.3 | 56.4 | 41.2 | -4.2 | 1. 9 | 70.5 | 25.1 |
| | Value of tanδ₀ | | | 2.63 | 2.66 | 3.01 | 2.64 | 2.37 | 2.45 | 0.61 |
| | Value of tanδ₁ | | | 2.94 | 2.90 | 2.86 | 2.58 | 2.31 | 1.11 | 0.55 |
| | Value of (tanδ₀ - tanδ₁)/(Tg₀ + 10) | | | -0.005 | -0.004 | 0.003 | 0.010 | 0.005 | 0.017 | 0.002 |
| | Sound insulating property | | | ○ | ○ | ○ | ○ | ○ | × | × |

In the evaluation of the transparency using the resin composition for forming the first layer in Examples 1 to 5, the haze value was low, and the transparency was excellent.

### EXPLANATION OF SYMBOLS

- 1:: First layer
- 1a:: First surface
- 1b:: Second surface
- 2:: Second layer
- 2a:: Outer surface
- 3:: Third layer
- 3a:: Outer surface
- 11:: Interlayer film
- 11A:: Interlayer film (first layer)
- 11a:: First surface
- 11b:: Second surface
- 21:: First lamination glass member
- 22:: Second lamination glass member
- 31:: Laminated glass
- 31A:: Laminated glass

## Claims

1. An interlayer film for laminated glass having a one-layer structure or a two or more-layer structure,
the interlayer film comprising a resin layer containing a resin component and a plasticizer,
combination of the resin component and the plasticizer in the resin layer being such that when a composition having a glass transition temperature of -10°C is obtained by blending only the plasticizer in 100 parts by weight of the resin component, a blending amount of the plasticizer per 100 parts by weight of the resin component in the composition is 60 parts by weight or less,
the interlayer film including:
a first configuration: when a composition having a glass transition temperature of -10°C is obtained by blending only the plasticizer in 100 parts by weight of the resin component, and tanδ at -10°C of the composition is defined as tanδ₁, the interlayer film satisfies the formula: tanδ₁ ≥ 1.3, or
a second configuration: when a glass transition temperature of the resin component in the resin layer is defined as Tg_{0°}C, and tanδ at Tg₀°C of the resin component in the resin layer is defined as tanδ₀, and when a composition having a glass transition temperature of -10°C is obtained by blending only the plasticizer in 100 parts by weight of the resin component, and tanδ at -10°C of the composition is defined as tanδ₁, the interlayer film satisfies the formula: (tanδ₀ - tanδ₁)/(Tg₀ + 10) ≤ 0.01.

2. The interlayer film for laminated glass according to claim 1, including the first configuration.

3. The interlayer film for laminated glass according to claim 1, including the second configuration.

4. The interlayer film for laminated glass according to claim 1, including the first configuration and the second configuration.

5. The interlayer film for laminated glass according to any one of claims 1 to 4, wherein the resin component in the resin layer has a glass transition temperature of 40°C or more.

6. The interlayer film for laminated glass according to any one of claims 1 to 5, wherein the resin component in the resin layer is a resin component other than a polyvinyl acetal resin.

7. The interlayer film for laminated glass according to claim 6, wherein the resin component is a polymer of a monomer having a vinyl group.

8. The interlayer film for laminated glass according to claim 7, wherein the polymer of the monomer having a vinyl group is a (meth)acryloyl polymer.

9. The interlayer film for laminated glass according to claim 7 or 8, wherein the monomer having a vinyl group includes a (meth)acrylic ester having a cyclic structure.

10. The interlayer film for laminated glass according to any one of claims 1 to 9, wherein the plasticizer includes an organic ester plasticizer.

11. The interlayer film for laminated glass according to claim 10, wherein the plasticizer includes triethylene glycol di-2-ethylhexanoate or triethylene glycol di-2-ethylbutyrate.

12. The interlayer film for laminated glass according to any one of claims 1 to 11, comprising:
a first layer; and
a second layer arranged on a first surface side of the first layer.

13. The interlayer film for laminated glass according to claim 12, wherein when an overall thickness of the interlayer film is T, the first layer has a thickness of 0.25T or less.

14. The interlayer film for laminated glass according to claim 12 or 13, further comprising: a third layer arranged on a second surface side opposite to the first surface side of the first layer.

15. The interlayer film for laminated glass according to claim 14, wherein
the first layer is the resin layer,
the second layer contains a thermoplastic resin and a plasticizer, and
the third layer contains a thermoplastic resin and a plasticizer.

16. A laminated glass comprising:
a first lamination glass member;
a second lamination glass member; and
the interlayer film for laminated glass according to any one of claims 1 to 15,
the interlayer film for laminated glass being arranged between the first lamination glass member and the second lamination glass member.
